# EUROPEAN PATENT SPECIFICATION

(11) **EP 1 594 120 B1**
(45) Date of publication and mention of the grant of the patent: **14.08.2013**
(21) Application number: 04101983.7
(22) Date of filing: 07.05.2004
(51) Int. Cl.: G10L 15/14

(54) **Method for building hidden Markov speech models**
Verfahren zur Herstellung von Hidden-Markov-Modellen
Procédé pour créer modèls de Markov cachés

(43) Date of publication of application: 09.11.2005
(73) Proprietor: Swisscom AG, 3050 Bern (CH)
(72) Inventor: Van Kommer, Robert, 1752 Villars-sur-Glâne (CH)
(74) Representative: P&TS SA (AG, Ltd.)

(56) References cited:
- EP-A- 0 984 430
- EP-A- 1 320 086
- US-A- 5 502 790
- L. FISSORE, P. LAFACE, C. VAIR: "Dynamic adaptation of vocabulary independent HMMS to an application environment" CSELT TECHNICAL REPORTS, vol. 28, no. 3, June 2000 (2000-06), pages 381-390, XP008035128 ITALY ISSN: 0393-2648
- MATSUMURA T ET AL: "Non-uniform unit based HMMs for continuous speech recognition" SPEECH COMMUNICATION, ELSEVIER SCIENCE PUBLISHERS, AMSTERDAM, NL, vol. 17, no. 3, 1 November 1995 (1995-11-01), pages 321-329, XP004001046 ISSN: 0167-6393
- ROSENBERG A E ET AL: "Small group speaker identification with common password phrases" SPEECH COMMUNICATION, ELSEVIER SCIENCE PUBLISHERS, AMSTERDAM, NL, vol. 31, no. 2-3, June 2000 (2000-06), pages 131-140, XP004205048 ISSN: 0167-6393

## Description

The present invention concerns a method for building hidden Markov speech models used by speech recognition systems.

### Description of related art

Over the past several years, speech recognition systems have been introduced on the market and are operational in many different telecommunication services, including notably directory assistance services, personal assistants, speech controlled devices and vehicles, computer software applications, and so on. However, the recognition performance is still far from being equivalent to the human capability, especially in noisy environments or for complex applications with vocabularies above 3000 words.

Known speech recognizers use hidden Markov models (HMMs) technologies for recognizing sentences. When a sentence is to be recognized, a recognition network is created that represents all possible combinations of models of speech units. In current applications, models are built either for whole words or for sub-words. Neuronal speech recognition systems and hybrids (HMMs with neuronal) have also been used extensively.

Whole-word models are trained directly with one specific HMM model per word. A model is typically composed of a finite number of HMM states and of several mixtures of Gaussians per state. The assignment of HMM states to acoustic patterns is learned from the training data. Speech models are built for a small amount of predefined speech units, for instance a small amount of application specific words which have to be recognized. A written transcription of each spoken utterance is introduced manually.

These models are typically used for small vocabularies such as digit-string recognition, or when only a reduced number of predefined keywords are to be recognized. The stringent requirement is that enough word samples, for example more than 500 or more than 2000, spoken by at least 2000 different speakers, are available for the training of each whole-word models. Recognition rate of the limited vocabulary is usually very high, for example higher than 99.5% with current systems. However, only words which have been selected for training are correctly recognized. Furthermore, whole-word models are not satisfactory for modeling co-articulation (e.g. assimilation processes) at word boundaries or to model prosody variability resulting from the different word positions in sentences.

Sub-word models have the advantage to be flexible in the sense that they can be combined to create new word models for which no recorded samples are available. Many different types of sub-words have been used; today most systems are using triphones, in which individual phones in context of two adjacent phones are modeled. However, typical recognition rate per word is lower than with whole-word recognition systems.

Some systems are using a mix of both approaches, either by training specific triphones for specific words, or by integrating whole-word models within a network of triphone models.

In current systems, the speech units for which models have to be built are predefined in advance. Unfortunately, this has the consequence that the number of training patterns used for training the different models is unequally represented within the training data. The consequence is an unpredictable accuracy of recognition performance; some models might be poorly trained while others are over trained. For a given recognizer, some words will be well recognized while others will not.

Fissore, et al. "Dynamic adaptation of vocabulary independent HMMs to an application environment", Cselt Technical Reports, vol. 28, no. 3, June 2000, p. 381 - 390, describes a software architecture to collect, select and use data. The knowledge database is increased by continued training of the system by a number of speakers.

Matsumura, et al., "Non-uniform unit based HMMs for continuous Speech recognition», Speech communication, elsevier science publishers, Amsterdam, NL, vol. 17, no. 3, 1. November 1995, p. 321 - 329, discloses a new algorithm for acoustic modelling to creat non uniform Hidden Markov Models. The described algorithm is however useful for the automatic iterative creation of long units but not for non uniform modelling.

It is therefore an aim of the present invention to improve the recognition rate and/or the flexibility of speech recognizers.

It is another aim to provide an improved method for building improved sets of hidden Markov speech models.

It is another aim to provide an improved method for building improved sets of hidden Markov speech models which are better adapted to speech recognition in specific applications.

In accordance with one embodiment of the present invention, a method for building hidden Markov speech models, according to the features of claim 1, is described.

Advantageously, speech units for which hidden Markov speech models are built have different, not predefined lengths.

The length of the speech unit means in this context for example the number of phones (or phone segments) in each speech unit, rather than its duration.

This has the advantage that the speech units for which a model is built are not predefined, but are automatically selected according to predefined criteria. In a preferred embodiment, speech models are more likely to be built for speech units which are common in the speech corpus. This has the advantage that widespread speech units will likely be better trained and recognized than unusual ones.

This has the further advantage that models are built (and trained) for all speech units that fulfill the predefined criteria, even if those speech units do not have a predefined length (number of phones / phone segments). This has the advantage that models are built even for very long, but common speech units, which will improve the reliability and robustness of the recognition. Conversely, this also has the advantage that no models are built for rare speech units, or speech units that do not fulfill the predefined criteria, even if those speech units are very short or if they are common outside the available speech corpus.

In a preferred embodiment, speech models are built at least for some sub-words, for some words, for some groups of several words and for some supra-words, including common complete sentences.

The invention will be better understood with the help of the description of a specific embodiment illustrated by the figures in which:
Figure 1 schematically illustrates of a flowchart of the method for building speech models.
Figure 2 illustrates a whole-word model of the French word "quatre" with a self-organized alignment of hidden Markov Models.

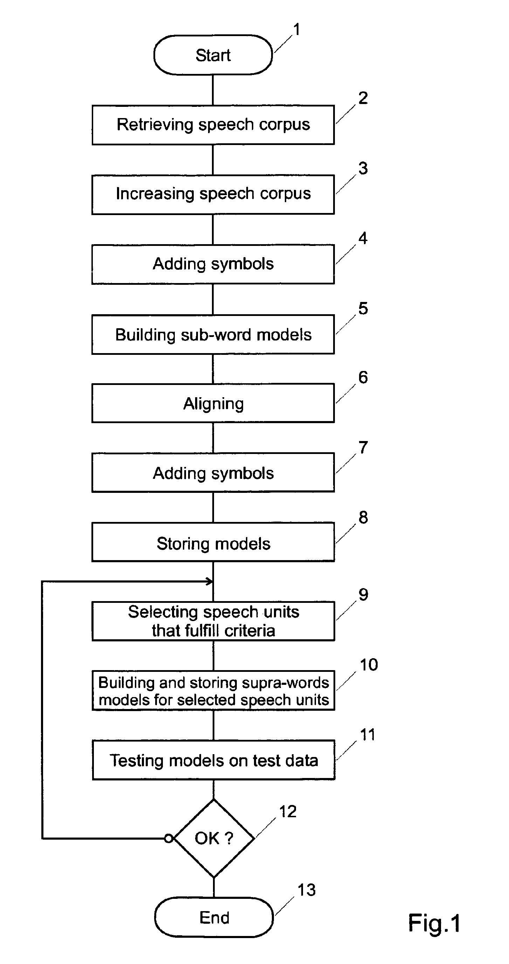

Figure 1 shows a flowchart of a method for building speech models according to the invention. After start at step 1, a speech corpus (i.e. a set of acoustic utterances and written transcription thereof) representative of an application of speech recognition is collected at step 2, for example by recording or collecting spoken patterns in the application or in a similar application. Better results are obtained if a speech corpus representative of the application is available, i.e. a collection of sentences and spoken material relating to a given subject or application, and/or spoken by a target group, and/or retrieved through a desired audio channel. For example, if the speech models are intended to be used for a voice directory assistance system, it may be useful to record and use audio requests from an existing similar system. The application-relevant keywords, for instance SQL database access keywords needed for the application completion or speech units useful in the application, are identified and annotated as such. The speech corpus is annotated, i.e. a written transcription, and possibly a phonetic transcription, of each pattern in the speech corpus is stored and associated with this pattern. A symbolic annotation may be manually associated to some patterns.

At step 3, the size of the available speech corpus is artificially increased by building new speech units through digital processing of existing ones. The aim of this step is to reduce the mismatch between training and use conditions of the speech models. Following processing operations may be performed on existing speech units in order to retrieve new speech units that are likely to be common in existing speech material:
- Voice morphing
- Applying a pitch-shift, for instance in order to simulate scarcely available children's voices.
- Adding pre-processed speech samples with simulated communication channel impairments
- Simulating an acousting environment, for example by adding noise, distortions, echos, etc
- Adding virtual speakers
- Varying the prosody at the word or sentence level, for example in order to create new training patterns (speech units) carrying a different symbolic. This may be used for instance in order to create an angry or emotive version of an existing speech unit.
- Simulating a transmission channel, for instance by changing the bandwidth, sampling rate and/or by adding distortion or noise typical for a simulated channel to available speech units.
- Etc.

The speech corpus retrieved after step 3 thus comprises a set of data, each data comprising a recorded or processed acoustic utterance, the corresponding written transcription, the corresponding phonetic transcription, and, for some data, a symbolic annotation which may possibly depend on the applied processing operation.

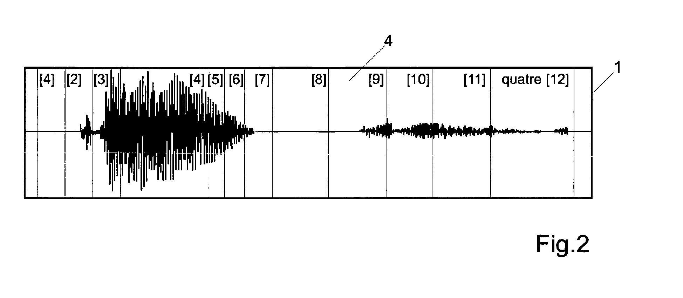

At step 5, a first standard hidden Markov Model system, based on triphones and/or on monophones and/or on other speech units with a predefined number of phones, is trained with the available speech units. The speech units are then aligned during step 6 in order to specify the start and end sample index of each phone. This is illustrated with Figure 2 that illustrates how a speech signal corresponding to the uttered French word "quatre" may be modeled with 13 successive HMMs states, each state is assigned to one phone segment. Especially for longer speech units, the alignment may be performed by a speech recognition operation constrained on the written or phonetic transcription of the speech unit.

In a various embodiment, the first standard hidden Markov Model system based on triphones and/or on monophones is trained with general purpose speech material, instead of being trained with the application-specific speech corpus. This may increase the amount of speech material available for each phone or triphone to be trained.

At step 7, new symbols may be added to some models created during the previous step. Symbols may indicate for instance one or several of the following properties:
- The model corresponds to a part of an application-relevant keyword
- Duration, speed
- Spoken style (read, spontaneous)
- Syllable attributes, intonation, stress pattern, ...
- Prosody (rising pitch, falling pitch, ...)
- Emotional attributes (neutral, angry, ...)
- Accent
- Cross-lingual attribute, for instance when a phone usually not available in a language is retrieved
- Speaker demographic parameters, for instance gender, geographic origin, age, education level, ...
- Application domain, for instance information service, gaming, ...
- Concatenation match factor, indicating if the speech unit has co-articulation impacts on other speech units
- Etc.

One model may carry several symbolic attributes. On the other hand, as already mentioned, several models may have a common written transcription but a different symbol. For instance, different models may be created for similar versions of a speech unit with a falling or rising prosody pattern, or with a different emotion.

The monophone or triphone models are then stored in an appropriate memory structure during step 8.

During next step 9, the speech model builder automatically searches in the speech corpus for speech units that fulfill a combination of predefined criteria, or for which an optimal combination of those predefined criteria is found. Following criteria may be used:
- Maximizing the number of phones in the speech units, for instance in order to model part of phrases or even complete sentences instead of phones or words, and/or
- Maximizing the number of occurrences of each modeled speech unit in the training speech corpus, and/or
- Minimizing the complexity of the speech models, for example the number of HMM states and the number of Gaussian mixtures in HMMs, or the number of neurons and/or the number of connections in neuronal or hybrid recognition systems, and thus improving the generalization of the model, and the robustness of the recognition, and/or
- Maximizing the match to symbolic features, and/or
- Improving a quality score of each speech model,
- Etc.

For instance, a speech unit which is very long, very common and for which a good model can be built is very likely to be selected during this step. Moreover, the recognition performance will be optimized for speech units having additional symbolic features, for instance speech units corresponding to keywords or sequences of keywords used by the application.

Each pattern of two or more monophones or triphones for which a selected combination of criteria is found will thus be selected.

Thus, according to the invention, the speech units for which a model is built and trained are not predefined, but learned from the speech corpus. Not all speech units in the speech corpus are used, but only those which are relevant for the application and which fulfill the predetermined criteria.

Furthermore, the length of the modeled speech units is not predefined; the optimal number of phones in each speech unit is automatically determined from the speech corpus.

Even the number of phones in the modeled speech units is variable; if the speech model building algorithm finds a sequence of phones, or of other basic speech units, that satisfies the predetermined criteria, a model will be built irrespective of the number of phones or other basic units in the sequence.

Different optimization methods may be used for determining the optimal set of speech units for which models should be built, and the optimal models for those speech units; simulated annealing or genetic algorithm have been found to be effective for this purpose. Basically, the method could consist in finding or expanding sequences of consecutive phones or basic speech units until the criteria are not fulfilled anymore.

During next step 10, a polyphone speech model is built for each selected speech unit found during the previous step. The acoustic resolution, i.e. the number of speech patterns (HMMs states) in each phone, is automatically determined using methods known from whole-word speech modeling algorithms. The algorithm thus determines for each speech unit an optimal set of, for instance, HMM model states, whereas each state may correspond to a different duration of the audio signal. The number of states may depend for example on the number of speech patterns available in the speech corpus.

Symbols may be added to those polyphone models, including for instance symbols mentioned in the above-described list.

The symbolic polyphone models are then tested during step 11, preferably on a cross-validation speech corpus or on the application speech data. The fitness of the speech unit selection is now measured using an appropriate metric, for instance the recognition rate. If the test fails (step 12), the steps 9, 10 and 11 are repeated until the fitness settles.

The method of the invention ends at step 13, during which the final performance of a speech recognizer using the models built is evaluated on a data set, and compared with other speech recognition units.

The method of the invention can be advantageously used for applications and services in which many sentences to be recognized are formulated in a similar way. For instance, in a typical directory assistance application, many users will formulate a request such as "*Please, give me the phone number of Mister John Smith in London".* When enough samples of the phrase "Please, give me" or even "Please, give me the phone number of" are available in the speech corpus (training set), the speech model building system of the invention will be able to build a unique HMM model for that phrase, or preferably different models with different symbols. The method of the invention thus selects from a given speech corpus the optimal set of speech models and the number of phones corresponding to each speech model. The fitness measure can be derived from the task completion rate for a given dialogue turn; in other words, the measure of performance is related to the recognition task of a given spoken input.

The set of speech models of the invention thus delivers for many speech units not only a corresponding written transcription, but also a corresponding symbol indicating a particular prosody, emotion, and so on. Those symbolic features are available at the output of the speech recognizer and may be used for other tasks, for example for improving the recognition rate using additional constraints on symbolic features. For example, it may be possible to exclude a transcription proposed by the speech recognition system if the prosody pattern indicated by the speech recognizer does not correspond to the pattern expected at a given position in a sentence. The symbols delivered are also useful to dialogue managers, requests sorting and classifying tools and translating applications to which the output of the speech recognition system may be delivered.

The monophone, triphone and/or whole-word models are preferably still available to the speech recognition system, as a fallback when the reliability of the recognition delivered by longer models is below a threshold or simply when no other speech models are available. The overall result of this new method is that we get the performance level of whole-word speech modeling while having the flexibility of sub-words modeling. Another advantage is that the speech units to be modeled are automatically retrieved, instead of being manually selected in a time-consuming and sub-optimal process.

During the recognition process, the speech recognizer uses whenever possible phrase or supra-word models built with the inventive method, and word or sub-word models as a fallback when not enough training patterns are available in the speech corpus.

The set of speech models built during the above described training steps may be improved and completed with speech material collected during actual speech recognition tasks. New symbols may be added on-the-fly. The system is thus adaptive.

## Claims

1. A method for building hidden Markov speech models to be used by a speech recognition system for a specific application, said method comprising:
• providing a speech corpus representative of said application and comprising a plurality of spoken sentences (1),
• selecting speech units in said speech corpus,
• buildingsaid Hidden Markov speech models for said speech units (3), said speech units being automatically selected from said speech corpus using predefined criteria (9), wherein
• the number of phones or phone segments of the selected speech units is not predefined, **characterized in that**
• the probability that a speech model is built for a particular speech unit is higher when the complexity of the speech model is low, thus improving the generalization of said speech model.

2. The method of claim 1, wherein the possible number of phones in the selected speech units is not predefined.

3. The method of one of the claims 1 or 2, wherein at least some speech units correspond to supra-words.

4. The method of claim 3, wherein speech models are built for some sub-words.

5. The method of one of the claims 1 to 4, wherein the decision to build a speech model for a particular speech unit depends on the number of occurrence of said particular speech unit in said speech corpus.

6. The method of one of the claims 1 to 5, wherein the probability that a speech model is built for a particular speech unit is higher if said speech unit is long.

7. The method of one of the claims 1 to 6, wherein the probability that a speech model is built for a particular speech unit is higher for application-relevant keywords as defined in a predefined list of keywords.

8. The method of one of the claims 1 to 7, wherein the decision to build a speech model for a particular speech unit depends on a quality score computed for the model, said quality score being higher when said speech models allows to recognize said particular speech unit with a higher confidence level.

9. The method of one of the claims 1 to 8, wherein the probability of a speech model being built for a particular speech unit is higher when symbolic information can be added to said speech model.

10. The method of one of the claims 1 to 9, wherein the probability that a speech model is built for a particular speech unit is higher for application-relevant words or sequence of words as defined in a predefined list.

11. The method of one of the claims 1 to 10, comprising a training step during which said speech models are built from said speech corpus, and a subsequent recognition step during which recognition of new speech material is performed,
wherein new speech models are built on-the-fly from said new speech material during said recognition step.

12. The method of one of the claims 1 to 11, comprising an initial step during which the amount of speech material in said speech corpus is increased by creating new speech units digitally processed from available speech units (3).

13. The method of claim 12, wherein new speech units are created by adding simulated communication channel impairments and/or artificial noises to existing speech units.

14. The method of one of the claims 12 to 13, wherein new speech units are created by varying the prosody of existing speech units.

15. The method of one of the claims 12 to 14, wherein new speech units are created by voice morphing.

16. The method of one of the claims 12 to 15, wherein new speech units are created by varying the pitch of existing speech units.

17. The method of one of the claims 12 to 16, wherein new speech units are created by adapting existing speech units as if they were spoken by predefined, virtual, speakers.

18. The method of one of the claims 12 to 17, wherein new speech units are created by simulating the reception of existing speech units over a different transmission channel.

19. The method of one of the claims 1 to 18, comprising:
building speech models for triphones and/or monophones in said speech corpus (3),
aligning said speech models (6),
selecting speech units in said speech corpus that fulfill predefined criteria (9),
building speech models for said selected speech units (10).

20. The method of one of the claims 1 to 19, wherein symbolic information is added to at least some speech models (7), said symbolic information indicating at least one of the following:
the model corresponds to an application-relevant keyword,
duration of the speech unit,
elocution speed,
syllable attributes, for example intonation or stress,
prosody pattern, for example rising pitch or falling pitch,
emotional attributes,
accent,
cross-lingual feature,
speaker cluster identification,
application domain,
co-articulation impact on other speech units.

21. The method of one of the claims 1 to 20, wherein duplicated speech models are built for similar speech units with a different symbolic.

22. The method of one of the claims 1 to 21, being applied to an automatic voice-based directory assistance system, wherein speech units are selected and models are built for parts of typical directory assistance requests.

23. The method of one of the claims 1 to 22, wherein the number of hidden Markov models states for a speech unit is not predefined.

24. A speech recognition apparatus for building speech models according to the method of one of the claims 1 to 23.

25. The speech recognition apparatus of the claim 24, further comprising adapting means for creating new speech models of variable length from recognized speech.

26. The speech recognition apparatus of one of the claims 24 to 25, adapted to deliver a written transcription as well as a symbol corresponding to at least some of the recognized speech utterances.

27. A computer program product causing a speech recognition hardware and computer system to build speech models according to the method of one of the claims 1 to 23 when said computer program product is run in a computer.

## Patentansprüche

1. Ein Verfahren zum Bilden von Hidden Markov Sprachmodellen, die in einem Spracherkennungssystem für eine spezielle Anwendung benutzt werden sollen, das Verfahren aufweisend:
• Bereitstellen eines Sprachkörpers, der die Anwendung repräsentiert und eine Vielzahl von gesprochenen Sätzen (1) aufweist,
• Auswählen von Spracheinheiten in dem Sprachkörper,
• Bilden der Hidden Markov Sprachmodelle für die Spracheinheiten (3), wobei die Spracheinheiten automatisch unter Verwendung von vordefinierten Kriterien (9) aus dem Sprachkörper ausgewählt werden, wobei
• die Anzahl der Sprachlaute oder der Sprachlautsegmente der ausgewählten Spracheinheiten nicht vordefiniert ist,
**gekennzeichnet dadurch, dass**
• die Wahrscheinlichkeit, dass ein Sprachmodel für eine spezielle Spracheinheit gebildet wird, höher ist, wenn die Komplexität des Sprachmodels niedrig ist, so dass die Verallgemeinerung des Sprachmodells verbessert wird.

2. Das Verfahren nach Anspruch 1, wobei die mögliche Anzahl der Sprachlaute in der ausgewählten Spracheinheit nicht vordefiniert ist.

3. Das Verfahren nach Anspruch 1 oder 2, wobei mindestens einige Spracheinheiten Suprawörtern entsprechen.

4. Das Verfahren nach Anspruch 3, wobei Sprachmodelle für einige Unterwörter gebildet werden.

5. Das Verfahren nach einem der Ansprüche 1 bis 4, wobei die Entscheidung ein Sprachmodell für eine spezielle Spracheinheit zu bilden von der Anzahl des Auftretens der speziellen Spracheinheit in dem Sprachkörper abhängt.

6. Das Verfahren nach einem der Ansprüche 1 bis 5, wobei die Wahrscheinlichkeit, dass ein Sprachmodel für eine spezielle Spracheinheit gebildet wird höher ist, wenn die Spracheinheit länger ist.

7. Das Verfahren nach einem der Ansprüche 1 bis 6, wobei die Wahrscheinlichkeit, dass ein Sprachmodell für eine spezielle Spracheinheit gebildet wird, für anwendungsrelevante Schlüsselwörter, die in einer vordefinierten Liste von Schlüsselwörtern definiert ist, höher ist.

8. Das Verfahren nach einem der Ansprüche 1 bis 7, wobei die Entscheidung ein Sprachmodell für eine spezielle Spracheinheit zu bilden von der Qualität des für das Model berechneten Scores abhängt, wobei der Qualitätsscore höher ist, wenn die Sprachmodelle es erlauben, die spezielle Spracheinheit mit einem höheren Konfidenzniveau zu erkennen.

9. Das Verfahren nach einem der Ansprüche 1 bis 8, wobei die Wahrscheinlichkeit, dass ein Sprachmodel für eine spezielle Spracheinheit gebildet wird höher ist, wenn eine symbolische Information zu dem Sprachmodel hinzugefügt werden kann.

10. Das Verfahren nach einem der Ansprüche 1 bis 9, wobei die Wahrscheinlichkeit, dass ein Sprachmodel für eine spezielle Spracheinheit gebildet wird höher ist für anwendungsrelevante Schlüsselwörter oder eine Sequenz von Wörtern, wie in einer Liste vordefiniert.

11. Das Verfahren nach einem der Ansprüche 1 bis 10, aufweisend einen Trainingsschritt während welches die Sprachmodelle aus dem Sprachkörper gebildet werden, und ein nachfolgender Erkennungsschritt während welches eine Erkennung von neuem Sprachmaterial durchgeführt wird, wobei neue Sprachmodelle während des Erkennungsschritts aus dem neuen Sprachmaterial on-the-fly gebildet werden.

12. Das Verfahren nach einem der Ansprüche 1 bis 11, aufweisend einen initialen Schritt während welches die Menge des Sprachmaterials in dem Sprachkörper durch das Schaffen neuer digital aus den verfügbaren Spracheinheiten (3) erarbeiteten Spracheinheiten vergrössert wird.

13. Das Verfahren nach Anspruch 12, wobei neue Spracheinheiten durch das Hinzufügen simulierter Kommunikationskanalschwächungen und/oder künstlichen Rauschens zu den existierenden Spracheinheiten geschaffen werden.

14. Das Verfahren nach einem der Ansprüche 12 bis 13, wobei neue Spracheinheiten durch das Variieren des Satzrythmusses der existierenden Spracheinheiten geschaffen werden.

15. Das Verfahren nach einem der Ansprüche 12 bis 14, wobei neue Spracheinheiten durch Sprachverwandlung geschaffen werden.

16. Das Verfahren nach einem der Ansprüche 12 bis 15, wobei neue Spracheinheiten durch das Variieren des Abstands von existierenden Spracheinheiten geschaffen werden.

17. Das Verfahren nach einem der Ansprüche 12 bis 16, wobei neue Spracheinheiten durch das Variieren von bestehenden Spracheinheiten, so als ob diese durch vordefinierte, virtuelle Sprecher gesprochen werden, geschaffen werden.

18. Das Verfahren nach einem der Ansprüche 12 bis 17, wobei neue Spracheinheiten durch das Simulieren des Empfangs von existierenden Spracheinheiten über einen unterschiedlichen Übertragungskanal geschaffen werden.

19. Das Verfahren nach einem der Ansprüche 1 bis 18, aufweisend:
Bilden von Sprachmodellen für dreifache Sprachlaute und/oder einfache Sprachlaute in dem Sprachkorpus (3)
Angleichen der Sprachmodelle (6),
auswählen von Spracheinheiten in dem Sprachkorpus, der vordefinierte Kriterien erfüllt,
Bilden von Sprachmodellen für die ausgewählten Spracheinheiten (10).

20. Das Verfahren nach einem der Ansprüche 1 bis 19, wobei symbolische Information zu dem mindestens einen Sprachmodell (7) hinzugefügt wird, wobei die symbolische Information mindestens eines der folgenden anzeigt:
das Modell entspricht einem Anwendungsspezifischen Schlüsselwort,
Dauer der Spracheinheit,
Vortragsgeschwindigkeit,
Silbenattribute, z.B. Betonung oder Akzent,
Satzrythmus, z.B. ansteigender Abstand oder abfallender Abstand,
emotionale Attribute,
Akzent,
über-sprachliche Merkmale,
Sprecherklusteridentifikation,
Anwendungsbereich,
koartikulationseinfluss auf andere Spracheinheiten.

21. Das Verfahren nach einem der Ansprüche 1 bis 20, wobei duplizierte Sprachmodelle für ähnliche Spracheinheiten mit unterschiedlichen Symbolen gebildet werden.

22. Das Verfahren nach einem der Ansprüche 1 bis 21, angewendet auf ein automatisches Sprachbasiertes Ordnerassistenzsystem, wobei Spracheinheiten ausgewählt werden und Modelle gebildet werden für Teile mit typischen Ordnerassistenzanfragen.

23. Das Verfahren nach einem der Ansprüche 1 bis 22, wobei die Nummer der Hidden Markov modellzustände für eine Sprache nicht vordefiniert ist.

24. Eine Spracherkennungsvorrichtung zum Bilden von Sprachmodellen nach einem der Verfahren nach Anspruch 1 bis 23.

25. Die Spracherkennungsvorrichtung nach Anspruch 24, weiter aufweisend Anpassungsmittel zum Erzeugen von neuen Sprachmodellen mit variabler Länge aus der erkannten Sprach.

26. Die Spracherkennungsvorrichtung nach Anspruch 24 oder 25, ausgebildet ein geschriebene Transkription und ein zumindest einigen der Sprachäußerungen entsprechendes Symbol zu liefern.

27. Ein Computerprogrammprodukt, das eine Spracherkennungshardware und eine Computersystem veranlasst, Sprachmodelle nach dem Verfahren nach einem der Ansprüche 1 bis 23 zu bilden, wenn das Computerprogrammprodukt auf einem Computer ausgeführt wird.

## Revendications

1. Procédé pour créer des modèles de Markov cachés destinés à être utilisés dans un système de reconnaissance vocale pour une application spécifique, ledit procédé comprenant:
• fourniture d'un corpus oral représentatif de ladite application et comprenant une pluralité de phrases énoncées (1),
• sélection d'unités de parole dans ledit corpus oral,
• élaboration desdits modèles de Markov cachés pour lesdites unités de parole (3), lesdites unités de parole étant sélectionnées automatiquement à partir dudit corpus oral en utilisant des critères prédéfinis (9),
• le nombre de phones ou de segments de phones des unités de parole sélectionnées n'étant pas prédéfini,
**caractérisé en ce que**
• la probabilité qu'un modèle de parole soit élaboré pour une unité de parole particulière est plus élevée lorsque la complexité du modèle de parole est basse, améliorant ainsi la généralisation dudit modèle.

2. Le procédé de la revendication 1, dans lequel le nombre possible de phones dans les unités de parole sélectionnées n'est pas prédéfini.

3. Le procédé de l'une des revendications 1 ou 2, dans lequel au moins certaines unités de parole correspondent à des supra-mots.

4. Le procédé de la revendication 3, dans lequel des modèles de parole sont élaborés pour certains sous-mots.

5. Le procédé de l'une des revendications 1 à 4, dans lequel la décision d'élaborer un modèle de parole pour une unité de parole particulière dépend du nombre d'occurrences de ladite unité de parole particulière dans ledit corpus oral.

6. Le procédé de l'une des revendications 1 à 5, dans lequel la probabilité qu'un modèle de parole soit élaboré pour une unité de parole particulière est plus élevée si ladite unité de parole est longue.

7. Le procédé de l'une des revendications 1 à 6, dans lequel la probabilité qu'un modèle de parole soit élaboré pour une unité de parole particulière est plus élevée pour des mots-clés se rapportant spécifiquement à une application et tels que définis dans une liste prédéfinie de mots-clés.

8. Le procédé de l'une des revendications 1 à 7, dans lequel la décision d'élaborer un modèle de parole pour une unité de parole particulière dépend d'un score de qualité calculé pour le modèle, ledit score de qualité étant plus élevé lorsque ledit modèle de parole permet de reconnaître ladite unité de parole particulière avec un niveau de confiance plus élevé.

9. Le procédé de l'une des revendications 1 à 8, dans lequel la probabilité qu'un modèle de parole soit élaboré pour une unité de parole particulière est plus élevée lorsque de l'information symbolique peut être ajoutée audit modèle de parole.

10. Le procédé de l'une des revendications 1 à 9, dans lequel la probabilité qu'un modèle de parole soit élaboré pour une unité de parole particulière est plus élevée pour des mots ou séquences de mots se rapportant spécifiquement à une application et tels que définis dans une liste prédéfinie.

11. Le procédé de l'une des revendications 1 à 10, comprenant une étape d'entraînement durant laquelle lesdits modèles de parole sont élaborés à partir dudit corpus oral, et une étape ultérieure de reconnaissance durant laquelle la reconnaissance de nouveau matériel vocal est effectuée,
dans lequel de nouveaux modèles de parole sont élaborés à la volée à partir dudit nouveau matériel vocal durant ladite étape de reconnaissance.

12. Le procédé de l'une des revendications 1 à 11, comprenant une étape initiale durant laquelle la quantité de matériel vocal dans ledit corpus oral est augmentée en créant de nouvelles unités de parole traitées numériquement à partir d'unités de parole disponibles (3).

13. Le procédé de la revendication 12, dans lequel de nouvelles unités de parole sont créées en ajoutant des déficiences simulées du canal de communication et/ou des bruits artificiels aux unités de parole existantes.

14. Le procédé de l'une des revendications 12 à 13, dans lequel de nouvelles unités de parole sont créées en variant la prosodie d'unités de parole existantes.

15. Le procédé de l'une des revendications 12 à 14, dans lequel de nouvelles unités de parole sont créées par morphing de voix.

16. Le procédé de l'une des revendications 12 à 15, dans lequel de nouvelles unités de parole sont créées en variant le registre de voix d'unités de parole existantes.

17. Le procédé de l'une des revendications 12 à 16, dans lequel de nouvelles unités de parole sont créées en adaptant des unités de parole existantes comme si elles était prononcées par des locuteurs virtuels prédéfinis.

18. Le procédé de l'une des revendications 12 à 17, dans lequel de nouvelles unités de parole sont créées en simulant la réception d'unités de parole existantes par le biais d'un différent canal de transmission.

19. Le procédé de l'une des revendications 1 à 18, comprenant:
l'élaboration de modèles de parole pour des triphones et/ou monophones dans ledit corpus oral (3),
l'alignement desdits modèles de parole (6),
la sélection d'unités de parole dans ledit corpus oral qui remplissent des critères prédéfinis (9),
l'élaboration de modèles de parole pour lesdites unités de parole sélectionnées (10).

20. Le procédé de l'une des revendications 1 à 19, dans lequel de l'information symbolique est ajoutée à au moins certains des modèles de parole (7), ladite information symbolique indiquant au moins un des éléments suivants:
le modèle correspond à un mot-clé se rapportant spécifiquement à une application,
durée de l'unité de parole,
vitesse d'élocution,
attributs de syllabe, par exemple intonation ou accent tonique,
schéma prosodique, par exemple haussement ou abaissement du ton de la voix,
attributs émotionnels,
accent,
caractéristique interlinguale,
identification de cluster de locuteurs,
domaine d'application
impact co-articulationnel sur d'autres unités de parole.

21. Le procédé de l'une des revendications 1 à 20, dans lequel des modèles de parole dupliqués sont élaborés pour des unités de parole similaires avec une symbolique différente.

22. Le procédé de l'une des revendications 1 à 21, étant appliqué à un système automatique d'assistance annuaire basé sur la voix, dans lequel les unités de parole sont sélectionnées et les modèles sont élaborés pour des parties de requêtes typiques d'un service d'assistance annuaire.

23. Le procédé de l'une des revendications 1 à 22, dans lequel le nombre d'états cachés de modèles de Markov pour une unité de parole n'est pas prédéfini.

24. Un appareil de reconnaissance vocale pour élaborer des modèles de parole selon le procédé de l'une des revendications 1 à 23.

25. L'appareil de reconnaissance vocale de la revendication 24, comprenant en outre des moyens d'adaptation pour créer de nouveaux modèles de parole de longueur variable à partir de paroles reconnues.

26. L'appareil de reconnaissance vocale de l'une des revendications 24 à 25, adaptée pour fournir une transcription écrite ainsi qu'un symbole correspondant à au moins certaines des paroles énoncées reconnues.

27. Un produit de logiciel informatique causant un appareil et système informatique de reconnaissance vocale d'élaborer des modèles de parole selon le procédé de l'une des revendications 1 à 23 lorsque ledit produit de logiciel informatique est exécuté dans un ordinateur.
